# FASCICULE DE BREVET EUROPEEN

(11) **EP 2 152 529 B1**
(45) Date de publication et mention de la délivrance du brevet: **03.08.2011**
(21) Numéro de dépôt: 08758635.0
(22) Date de dépôt: 20.05.2008
(51) Int. Cl.: B60C 5/14

(54) **OBJET PNEUMATIQUE POURVU D'UNE COUCHE ÉTANCHE AUX GAZ A BASE D'UN ÉLASTOMÈRE THERMOPLASTIQUE**
DRUCKLUFTARTIKEL MIT GASDICHTER SCHICHT MIT EINEM THERMOPLASTISCHEN ELASTOMER
PNEUMATIC ARTICLE WITH GAS TIGHT LAYER INCLUDING A THERMOPLASTIC ELASTOMER

(30) Priorité: 29.05.2007 FR 0703840
(43) Date de publication de la demande: 17.02.2010
(73) Titulaire: Société de Technologie MICHELIN, 63000 Clermont-Ferrand (FR); MICHELIN Recherche et Technique S.A., 1763 Granges-Paccot (CH)
(72) Inventeur: LESAGE, Pierre, F-63000 Clermont-Ferrand (FR); CUSTODERO, Emmanuel, F-63400 Chamalieres (FR)
(74) Mandataire: Ribière, Joel
(86) Numéro de dépôt international: PCT/EP2008/004024
(87) Numéro de publication internationale: WO 2008/145276

(56) Documents cités:
- EP-A- 0 722 850
- EP-A- 1 195 402
- EP-A- 1 419 903
- EP-A- 1 632 335
- US-A- 5 824 170
- US-A1- 2004 031 550

## Description

La présente invention est relative aux objets "pneumatiques", c'est-à-dire, par définition, aux objets qui prennent leur forme utilisable quand on les gonfle d'air ou d'un gaz de gonflage équivalent.

Elle se rapporte plus particulièrement aux couches étanches aux gaz assurant l'étanchéité de ces objets pneumatiques, en particulier celle des bandages pneumatiques, voir par example le document US-A-2004/031550.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettant de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" *("inner liner")* étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Or, les Demanderesses ont découvert lors de leurs recherches qu'un élastomère autre que butyl permet l'obtention de couches internes d'étanchéité répondant à un tel objectif, tout en offrant à ces dernières de très bonnes propriétés d'étanchéité.

Ainsi, selon un premier objet, la présente invention concerne un objet pneumatique pourvu d'une couche élastomère étanche aux gaz de gonflage tels que l'air, ladite couche élastomère comportant au moins, à titre d'élastomère majoritaire, un élastomère thermoplastique styrène/ isobutylène/ styrène (en abrégé "SIBS").

Comparativement aux caoutchoucs butyl, le SIBS présente en outre l'avantage majeur, en raison de sa nature thermoplastique, de pouvoir être travaillé tel quel à l'état fondu (liquide), et par conséquent d'offrir une possibilité de mise en oeuvre simplifiée.

L'invention concerne particulièrement les objets pneumatiques en caoutchouc tels que des bandages pneumatiques, ou les chambres à air, notamment les chambres à air pour bandage pneumatique.

L'invention concerne plus particulièrement les bandages pneumatiques destinés à équiper des véhicules à moteur de type tourisme, SUV *("Sport Utility Vehicles"),* deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également un procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz telle que définie ci-dessus.

L'invention concerne également l'utilisation comme couche étanche aux gaz de gonflage, dans un objet pneumatique, d'une couche élastomère telle que définie ci-dessus.

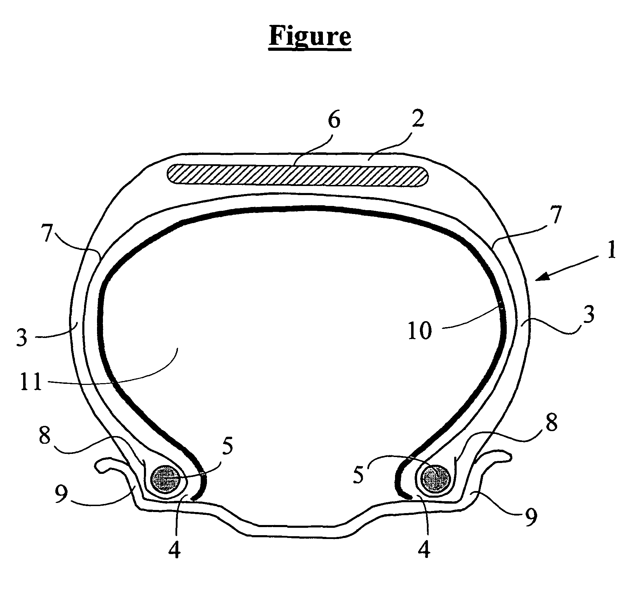

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### 1. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Couche élastomère étanche aux gaz

L'objet pneumatique selon l'invention a pour caractéristique essentielle d'être pourvu d'au moins une couche ou composition élastomère étanche aux gaz qui comporte au moins, à titre d'élastomère majoritaire (en poids), un élastomère thermoplastique SIBS auquel peut être associée, selon un mode de réalisation préférentiel de l'invention, au moins une huile d'extension en tant qu'agent plastifiant.

### I-1-A. Elastomère thermoplastique SIBS

Par élastomère SIBS on entend dans la présente demande, par définition, tout élastomère tribloc styrène/ isobutylène/ styrène dont le bloc central polyisobutylène peut être interrompu ou non par une ou plusieurs unités insaturées, en particulier une ou plusieurs unités diéniques telles qu'isopréniques, éventuellement halogénées.

L'élastomère SIBS ci-dessus fait partie, de manière connue, de la famille des élastomères thermoplastiques (en abrégé "TPE"), plus précisément des élastomères thermoplastiques styréniques (en abrégé "TPS").

On rappellera ici que les élastomères TPS se présentent généralement sous la forme de copolymères blocs à base de styrène. De structure intermédiaire entre polymères thermoplastiques et élastomères, ils sont constitués de séquences rigides polystyrène reliées par des séquences souples élastomère, par exemple polybutadiène, polyisoprène, poly(éthylène/butylène), ou encore polyisobutylène dans le cas par exemple du SIBS. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple styrène et isobutylène pour le SIBS).

Selon un mode de réalisation préférentiel de l'invention, le taux pondéral de styrène, dans l'élastomère SIBS, est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10 et 40%, en particulier entre 15 et 35%.

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p*-méthylstyrène, *tert-*butylstyrène) les chlorostyrènes (par exemple monochlorostyrène, dichlorostyrène).

On préfère que la température de transition vitreuse (Tg, mesurée selon ASTM D3418) de l'élastomère SIBS soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg de l'élastomère SIBS est plus préférentiellement encore inférieure à - 50°C.

La masse moléculaire moyenne en nombre (notée Mn) de l'élastomère SIBS est préférentiellement comprise entre 30 000 et 500 000 g/mol, plus préférentiellement comprise entre 40 000 et 400 000 g/mol. En dessous des minima indiqués, la cohésion entre les chaînes d'élastomère SIBS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) de l'élastomère SIBS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère SIBS est de préférence inférieur à 3 ; plus préférentiellement Ip est inférieur à 2.

L'élastomère SIBS peut constituer à lui seul la couche élastomère étanche aux gaz ou bien être associé, dans cette couche élastomère, à d'autres constituants pour former une composition élastomère.

Si d'éventuels autres élastomères sont utilisés dans cette composition, l'élastomère SIBS constitue l'élastomère majoritaire en poids ; il représente alors de préférence plus de 50%, plus préférentiellement plus de 70% en poids de l'ensemble des élastomères. De tels élastomères complémentaires, de préférence minoritaires, pourraient être par exemple des élastomères diéniques tels que du caoutchouc naturel ou un polyisoprène synthétique, un caoutchouc butyl ou des élastomères thermoplastiques styréniques (TPS) autres que SIBS, dans la limite de la compatibilité de leurs microstructures.

A titre d'élastomère TPS autre que SIBS utilisable en complément du SIBS précédemment décrit peut être cité notamment un élastomère TPS choisi dans le groupe constitué par les copolymères blocs styrène/ butadiène/ styrène, les copolymères blocs styrène/ isoprène/ styrène, les copolymères blocs styrène/ isoprène/ butadiène/ styrène, les copolymères blocs styrène/ éthylène/ butylène/ styrène, les copolymères blocs styrène/ éthylène/ propylène/ styrène, les copolymères blocs styrène/ éthylène/ éthylène/ propylène/ styrène et les mélanges de ces copolymères. Plus préférentiellement, ledit élastomère TPS complémentaire éventuel est choisi dans le groupe constitué par les copolymères blocs styrène/ éthylène/ butylène/ styrène, les copolymères blocs styrène/ éthylène/ propylène/ styrène et les mélanges de ces copolymères.

Toutefois, selon un mode de réalisation préférentiel, l'élastomère SIBS est le seul élastomère, et le seul élastomère thermoplastique présent dans la composition ou couche élastomère étanche aux gaz.

Les élastomères SIBS peuvent être mis en oeuvre de façon classique pour des TPE, par extrusion ou moulage, par exemple à partir d'une matière première disponible sous la forme de billes ou de granulés. Ils sont disponibles commercialement, vendus par exemple par la société KANEKA sous la dénomination "SIBSTAR" (e.g. "Sibstar 102T", "Sibstar 103T" ou "Sibstar 073T").

Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPE, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

Toutefois, à la connaissance des Demanderesses, aucun document de l'état de la technique ne décrit ni ne suggère leur utilisation, à titre d'élastomère majoritaire, dans une couche élastomère étanche aux gaz d'un objet pneumatique, en particulier dans un bandage pneumatique, où ce produit s'est révélé, de manière tout à fait inattendue, apte à concurrencer des formulations conventionnelles à base de caoutchouc butyl.

### I-1-B. Huile d'extension

L'élastomère SIBS précédemment décrit est suffisant à lui seul pour que soit remplie la fonction d'étanchéité aux gaz vis-à-vis des objets pneumatiques dans lesquels il est utilisé.

Toutefois, selon un mode de réalisation préférentiel de l'invention, ce dernier est utilisé dans une composition qui comporte également, à titre d'agent plastifiant, une huile d'extension (ou huile plastifiante) dont la fonction est de faciliter la mise en oeuvre, particulièrement l'intégration dans l'objet pneumatique par un abaissement du module et une augmentation du pouvoir tackifiant de la couche étanche aux gaz, au prix toutefois d'une certaine perte d'étanchéité.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Il est à noter que l'ajout d'une huile d'extension au SIBS entraîne une perte d'étanchéité de ce dernier, variable selon le type et la quantité d'huile utilisée. On utilise préférentiellement une huile du type polybutène, en particulier une huile polyisobutylène (en abrégé "PIB"), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51 ".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45pm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche élastomère étanche aux gaz, notamment de l'objet pneumatique dans lequel elle est destinée à être utilisée.

On préfère que le taux d'huile d'extension soit supérieur à 5 pce, de préférence compris entre 5 et 100 pce (parties en poids pour cent parties d'élastomère total, c'est-à-dire SIBS plus tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

### I-1-C. Additifs divers

La couche ou composition étanche à l'air décrite ci-dessus peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes, des agents colorants avantageusement utilisables pour la coloration de la composition, des charges lamellaires améliorant encore l'étanchéité (e.g. phyllosilicates tels que kaolin, talc, mica, graphite, argiles ou argiles modifiées *("organo clays"),* des plastifiants autres que les huiles d'extension précitées, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (SIBS et autres élastomères éventuels) précédemment décrits, la composition étanche aux gaz pourrait aussi comporter, toujours selon une fraction pondérale minoritaire par rapport à l'élastomère SIBS, des polymères autres que des élastomères, tels que par exemple des polymères thermoplastiques compatibles avec l'élastomère SIBS.

La couche ou composition étanche aux gaz précédemment décrite est un composé solide (à 23°C) et élastique, qui se caractérise notamment, grâce à sa formulation spécifique, par une très haute souplesse et très haute déformabilité.

Selon un mode de réalisation préférentiel de l'invention, cette couche ou composition étanche aux gaz présente un module sécant en extension, à 10% d'allongement (noté M10), qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

### 1-2. Utilisation de la couche étanche à l'air dans un bandage pneumatique

La couche ou composition à base de SIBS précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Ainsi par exemple, pour des bandages pneumatiques de type tourisme, elle peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

Comparativement à une couche étanche à l'air usuelle à base de caoutchouc butyl, la composition étanche à l'air décrite ci-dessus a l'avantage de présenter une hystérèse nettement plus faible, et donc d'offrir une résistance au roulement réduite aux bandages pneumatiques, comme cela est démontré dans les exemples de réalisation qui suivent.

### II. EXEMPLES DE REALISATION DE L'INVENTION

La couche élastomère étanche aux gaz précédemment décrite est avantageusement utilisable dans les bandages pneumatiques de tous types de véhicules, en particulier véhicules tourisme ou véhicules industriels tels que Poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou *"inner liner")* couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, un élastomère SIBS ("Sibstar 102T" avec un taux de styrène d'environ 15%, une Tg d'environ - 65°C et une Mn d'environ 90 000 g/mol) étendu avec environ 55 pce d'huile PIB ("Dynapak Poly 190" - Mn de l'ordre de 1000 g/mol).

Le pneumatique pourvu de sa couche étanche à l'air (10) tel que décrit ci-dessus peut être réalisé avant ou après vulcanisation (ou cuisson).

Dans le premier cas (i.e., avant cuisson du bandage pneumatique), la couche étanche à l'air est simplement appliquée de façon conventionnelle à l'endroit souhaité, pour formation de la couche 10. La vulcanisation est ensuite effectuée classiquement. Les élastomères SIBS supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche *("skim")* d'épaisseur adaptée, avant de recouvrir cette dernière avec le reste de la structure du bandage pneumatique, selon des techniques de fabrication bien connues de l'homme du métier.

Dans le second cas (i.e., après cuisson du bandage pneumatique), la couche étanche est appliquée à l'intérieur du bandage pneumatique cuit par tout moyen approprié, par exemple par collage, par pulvérisation ou encore extrusion et soufflage d'un film d'épaisseur appropriée.

Dans les exemples qui suivent, les propriétés d'étanchéité ont tout d'abord été analysées sur des éprouvettes de compositions à base de caoutchouc butyl d'une part, de SIBS ("Sibstar 102T") d'autre part (avec et sans huile d'extension, pour ce qui concerne l'élastomère SIBS).

Pour cette analyse, on a utilisé un perméamètre à parois rigides, placé dans une étuve (température de 60°C dans le cas présent), muni d'un capteur de pression (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 3 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire (moyenne sur 1000 points) donnant la pente α de la perte de pression, à travers l'éprouvette testée, en fonction du temps, après stabilisation du système, c'est-à-dire obtention d'un régime stable au cours duquel la pression décroît linéairement en fonction du temps.

Tout d'abord, le SIBS utilisé seul, c'est-à-dire sans huile d'extension ni autre additif, s'est révélé présenter, à épaisseur égale, un coefficient de perméabilité très bas, égal à celui de la composition usuelle à base de caoutchouc butyl ; son module M10 est quant à lui inférieur de près de 40% à celui de la composition témoin (1,4 MPa comparé à 2,3 MPa).

Ceci constitue déjà un résultat remarquable pour un tel matériau.

Comme déjà indiqué, si l'on accepte en contrepartie une certaine perte d'étanchéité, l'ajout d'une huile d'extension à l'élastomère SIBS permet avantageusement de faciliter l'intégration de la composition élastomère dans l'objet pneumatique, par un abaissement du module et une augmentation du pouvoir tackifiant de cette dernière.

Ainsi, en utilisant par exemple 45 et 65 pce d'huile d'extension, on a constaté que le coefficient de perméabilité était augmenté (et donc l'étanchéité réduite) de plus de deux (2,2 et 3,4 fois, respectivement) en présence d'une huile conventionnelle telle que paraffinique, alors que ce coefficient n'était augmenté que d'un facteur nettement inférieur à deux (1,5 et 1,6 fois, respectivement) en présence de l'huile PIB ("Dynapak Poly 190"), facteur finalement peu pénalisant pour une utilisation dans un bandage pneumatique.

C'est en cela que la combinaison de SIBS et d'huile PIB s'est révélée offrir le meilleur compromis de propriétés. Sur cette composition à base de SIBS et PIB, on a constaté par ailleurs que le module M 10 était encore diminué, réduit à une valeur inférieure à 1 MPa.

A la suite des tests de laboratoire ci-dessus, des bandages pneumatiques conformes à l'invention, du type pour véhicule tourisme (dimension 195/65 R15), ont été fabriqués ; leur paroi interne a été recouverte par une couche étanche à l'air (10) d'une épaisseur de 0,9 mm (sur tambour de confection, avant fabrication du reste du pneumatique), puis les pneumatiques vulcanisés. La dite couche étanche à l'air (10) était formée du SIBS étendu avec 55 pce d'huile PIB, telle que décrite supra.

Ces bandages pneumatiques conformes à l'invention ont été comparés à des bandages témoins (marque Michelin "Energy 3") comportant une couche étanche à l'air conventionnelle, de même épaisseur, à base de caoutchouc butyl. La résistance au roulement des bandages pneumatiques a été mesurée sur un volant, selon la méthode ISO 87-67 (1992).

On a constaté que les bandages pneumatiques de l'invention présentaient une résistance au roulement réduite de manière très significative et inattendue pour l'homme du métier, de près de 4% par rapport aux bandages pneumatiques témoins.

En conclusion, l'invention offre aux concepteurs de bandages pneumatiques l'opportunité de réduire l'hystérèse des couches internes d'étanchéité de manière très sensible, et donc la consommation de carburant des véhicules automobiles équipés de tels bandages.

Le SIBS présente en outre l'avantage majeur, en raison de son caractère thermoplastique, de pouvoir être travaillé à l'état fondu (liquide) et donc d'offrir une possibilité de mise en oeuvre améliorée de ces couches internes d'étanchéité, comparativement aux compositions de caoutchoucs butyl usuelles.

## Revendications

1. Objet pneumatique pourvu d'une couche élastomère étanche aux gaz de gonflage, **caractérisé en ce que** ladite couche élastomère comporte au moins, à titre d'élastomère majoritaire, un élastomère thermoplastique styrène/ isobutylène/ styrène

2. Objet pneumatique selon la revendication 1, dans lequel l'élastomère SIBS comprend entre 5 et 50% en masse de styrène.

3. Objet pneumatique selon les revendications 1 ou 2, dans lequel la température de transition vitreuse (Tg) de l'élastomère SIBS est inférieure à - 20°C.

4. Objet pneumatique selon l'une quelconque des revendications 1 à 3, dans lequel la masse moléculaire moyenne en nombre (Mn) de l'élastomère SIBS est comprise entre 30 000 et 500 000 g/mol.

5. Objet pneumatique selon l'une quelconque des revendications 1 à 4, dans lequel la couche étanche comporte une huile d'extension de l'élastomère.

6. Objet pneumatique selon la revendication 5, dans lequel l'huile d'extension est choisie dans le groupe constitué par les huiles polyoléfiniques, les huiles paraffiniques, les huiles naphténiques, les huiles aromatiques, les huiles minérales, et les mélanges de ces huiles.

7. Objet pneumatique selon la revendication 5 ou 6, dans lequel la masse moléculaire moyenne en nombre Mn de l'huile d'extension est comprise entre 200 et 25 000 g/mol.

8. Objet pneumatique selon l'une quelconque des revendications 5 à 7, dans lequel le taux d'huile d'extension est supérieur à 5 pce.

9. Objet pneumatique selon la revendication 8, dans lequel le taux d'huile d'extension est compris entre 5 et 100 pce.

10. Objet pneumatique selon l'une quelconque des revendications 1 à 9, dans lequel la couche étanche a une épaisseur supérieure à 0,05 mm, de préférence entre 0,1 et 10 mm.

11. Objet pneumatique selon l'une quelconque des revendications 1 à 10, dans lequel la couche étanche est disposée sur la paroi interne de l'objet pneumatique.

12. Objet pneumatique selon l'une quelconque des revendications 1 à 11, **caractérisé en ce que** ledit objet est en caoutchouc.

13. Objet pneumatique selon l'une quelconque des revendications 1 à 12, **caractérisé en ce que** ledit objet pneumatique est un bandage pneumatique.

14. Objet pneumatique selon l'une quelconque des revendications 1 à 12, **caractérisé en ce que** ledit objet pneumatique est une chambre à air.

## Claims

1. Inflatable article equipped with an elastomer layer impermeable to inflation gases, **characterized in that** said elastomer layer comprises at least, as the predominant elastomer, a thermoplastic styrene/isobutylene/styrene elastomer.

2. Inflatable article according to Claim 1, in which the SIBS elastomer comprises between 5 and 50% by weight of styrene.

3. Inflatable article according to Claims 1 or 2, in which the glass transition temperature (T_{g}) of the SIBS elastomer is less than -20°C.

4. Inflatable article according to any one of Claims 1 to 3, in which the number-average molecular weight (Mₙ) of the SIBS elastomer is between 30 000 and 500 000 g/mol.

5. Inflatable article according to any one of Claims 1 to 4, in which the airtight layer comprises an extender oil for the elastomer.

6. Inflatable article according to Claim 5, in which the extender oil is chosen from the group composed of polyolefin oils, paraffinic oils, naphthenic oils, aromatic oils, mineral oils, and mixes of these oils.

7. Inflatable article according Claim 5 or 6, in which the number-average molecular weight (Mₙ) of the extender oil is between 200 and 25 000 g/mol.

8. Inflatable article according to any one of Claims 5 to 7, in which the content of extender oil is greater than 5 phr.

9. Inflatable article according to Claim 8, in which the content of extender oil is between 5 phr and 100 phr.

10. Inflatable article according to any one of Claims 1 to 9, in which the airtight layer has a thickness greater than 0.05 mm, preferably between 0.1 mm and 10 mm.

11. Inflatable article according to any one of Claims 1 to 10, in which the airtight layer is positioned on the inner wall of the inflatable article.

12. Inflatable article according to any one of Claims 1 to 11, **characterized in that** said article is made of rubber.

13. Inflatable article according to any one of Claims 1 to 12, **characterized in that** said inflatable article is a pneumatic tyre.

14. Inflatable article according to any one of Claims 1 to 12, **characterized in that** said inflatable article is an inner tube.

## Patentansprüche

1. Pneumatischer Gegenstand, der mit einer gegenüber den Aufpumpgasen dichten Elastomerschicht versehen ist, **dadurch gekennzeichnet, dass** die Elastomerschicht mindestens als mehrheitliches Elastomermaterial ein thermoplastisches Styrol/Isobutylen/Styrol-Elastomer aufweist.

2. Pneumatischer Gegenstand nach Anspruch 1, bei dem das SIBS-Elastomer zwischen 5 und 50 Masseprozent Styrol enthält.

3. Pneumatischer Gegenstand nach den Ansprüchen 1 oder 2, bei dem die Glasübergangstemperatur (Tg) des SIBS-Elastomers geringer als -20°C ist.

4. Pneumatischer Gegenstand nach einem der Ansprüche 1 bis 3, bei dem das mittlere zahlenmäßige Molekulargewicht (Mn) des SIBS-Elastomers zwischen 30 000 und 500 000 g/mol liegt.

5. Pneumatischer Gegenstand nach einem der Ansprüche 1 bis 4, bei dem die dichte Schicht ein Extenderöl des Elastomers aufweist.

6. Pneumatischer Gegenstand nach Anspruch 5, bei dem das Extenderöl aus der Gruppe ausgewählt wird, die aus den Polyolefinölen, den Paraffinölen, den Naphtenölen, den aromatischen Ölen, den Mineralölen und den Mischungen dieser Öle besteht.

7. Pneumatischer Gegenstand nach Anspruch 5 oder 6, bei dem das mittlere zahlenmäßige Molekulargewicht Mn des Extenderöls zwischen 200 und 25 000 g/mol liegt.

8. Pneumatischer Gegenstand nach einem der Ansprüche 5 bis 7, bei dem die Extenderölrate höher als 5 pce ist.

9. Pneumatischer Gegenstand nach Anspruch 8, bei dem die Extenderölrate zwischen 5 und 100 pce liegt.

10. Pneumatischer Gegenstand nach einem der Ansprüche 1 bis 9, bei dem die dichte Schicht eine Dicke von mehr als 0,05 mm, vorzugsweise zwischen 0,1 und 10 mm hat.

11. Pneumatischer Gegenstand nach einem der Ansprüche 1 bis 10, bei dem die dichte Schicht auf der Innenwand des pneumatischen Gegenstands angeordnet ist.

12. Pneumatischer Gegenstand nach einem der Ansprüche 1 bis 11, **dadurch gekennzeichnet, dass** der Gegenstand aus Kautschuk ist.

13. Pneumatischer Gegenstand nach einem der Ansprüche 1 bis 12, **dadurch gekennzeichnet, dass** der pneumatische Gegenstand ein Luftreifen ist.

14. Pneumatischer Gegenstand nach einem der Ansprüche 1 bis 12, **dadurch gekennzeichnet, dass** der pneumatische Gegenstand ein Luftschlauch ist.
